**Europäisches Patentamt**

**European Patent Office**

**Office européen des brevets**

(11) Numéro de publication: **0 247 917**
**B1**

## FASCICULE DE BREVET EUROPÉEN

(45) Date de publication du fascicule du brevet:
02.06.89

(51) Int. Cl.⁴: **F 16 H 27/02**

(21) Numéro de dépôt: **87400983.0**

(22) Date de dépôt: **29.04.87**

(54) **Mécanisme pour transformer un mouvement rectiligne alternatif en un mouvement de rotation pas à pas.**

(30) Priorité: **27.05.86 FR 8607541**

(43) Date de publication de la demande:
**02.12.87 Bulletin 87/49**

(45) Mention de la délivrance du brevet:
**02.06.89 Bulletin 89/31**

(84) Etats contractants désignés:
**AT BE CH DE GB IT LI LU NL SE**

(56) Documents cité:
**EP-A-0 001 022**
**EP-A-0 117 773**
**GB-A-1 423 522**

(73) Titulaire: **FIVES- CAIL BABCOCK, Société Anonyme, 38, rue de la République, F-93107 Montreuil (FR)**

(72) Inventeur: **Georget, Jean- Pierre, 10, route d'Haspres, F-59282 Douchy Les Mines (FR)**

(74) Mandataire: **Fontanié, Etienne, FIVES- CAIL BABCOCK 38, rue de la République, F-93107 Montreuil Cédex (FR)**

## Description

La présente invention a pour objet un mécanisme comportant un premier élément présentant un axe longitudinal et apte à être déplacé dans la direction de cet axe, alternativement dans un sens et dans l'autre, entre une première et une seconde positions, et un second élément de forme annulaire, entourant le premier élément et apte à être déplacé en rotation autour de l'axe longitudinal du premier élément, l'un des éléments portant un jeu de cames et l'autre élément portant au moins une broche ou un galet à axe radial coopérant avec les dites cames pour transformer le mouvement linéaire, alternatif, du premier élément en un mouvement de rotation pas à pas du second élément.

Dans le brevet français FR-A-2 540 236 la demanderesse a décrit un mécanisme de ce type comportant deux cames annulaires, à profil en dents de scie, dont le nombre de dents est égal à la moitié du nombre de pas nécessaires pour faire effectuer un tour complet au second élément, les deux cames ou les deux galets coopérant avec celles-ci étant décalés angulairement d'un pas. Pour éviter une rotation incontrolée du second élément on utilise dans ce mécanisme des ressorts qui maintiennent constamment les galets en contact avec les cames. En particulier, lorsque le premier élément se trouve dans l'une ou l'autre de ses positions extrêmes, l'un des galets est maintenu au fond des dents de la came coopérante par les ressorts pour bloquer la rotation du second élément. L'efficacité de ce verrouillage dépend de la force des ressorts. Si celle-ci est élevée, comme cela est souhaitable pour des raisons de sécurité, il faudra utiliser un moteur de forte puissance pour déplacer le premier élément. Ce moteur sera donc coûteux et encombrant ce qui constitue un inconvénient sérieux lorsque le mécanisme doit être logé dans un espace restreint, par exemple dans un arbre creux.

Le but de la présente invention est de fournir un mécanisme de ce type dans lequel les deux éléments sont constamment liés de façon positive, en particulier lorsque le premier élément est dans l'une ou l'autre de ses positions extrêmes, et qui ne nécessite pour sa commande qu'une puissance réduite.

Le mécanisme objet de la présente invention est caractérisé en ce qu'un des éléments porte au moins deux cames ayant en plan la forme d'un rectangle, dont deux côtés sont parallèles à l'axe desdits éléments, prolongé, dans la direction de cet axe, par un triangle, ces cames étant circonférentiellement et axialement espacées l'une de l'autre et orientées en sens opposés, en ce que l'autre élément porte au moins trois broches dont les axes, qui sont radiaux, sont disposés dans un même plan perpendiculaire à l'axe desdits éléments et sont circonférentiellement espacés les uns des autres, la largeur et la disposition des cames et l'écartement des broches étant tels que deux broches voisines peuvent être simultanément en contact avec les côtés opposés de la partie rectangulaire d'une came et la troisième broche se trouve alors en face de la pointe de l'autre came, et en ce qu'un organe d'aiguillage est associé à chaque came et est appliqué élastiquement sur un côté de la partie triangulaire de la came, près de sa base, de telle sorte qu'il puisse s'écarter pour autoriser le passage d'une broche se déplaçant le long de ce côté, de la pointe vers la base de cette partie de la came, et reste plaqué sur le côté de la came et en écarte la broche lorsque celle-ci, se déplaçant en sens inverse le long de la partie rectangulaire de la came, atteint la base de la partie triangulaire.

L'organe d'aiguillage pourra avantageusement être constitué par une aiguille montée pivotante sur un axe radial situé à l'opposé de la partie rectangulaire de la came par rapport à la pointe de celle-ci, la pointe de l'aiguille étant située approximativement au niveau de la base de la partie triangulaire de la came et étant appliquée sur la came par un ressort.

La rotation des aiguilles est limitée par des butées de façon que la largeur du couloir ménagé entre la came et l'aiguille respective, lorsque celle-ci est écartée de la came, soit juste suffisante pour le passage d'une broche.

Les cames et/ou les broches sont régulièrement réparties sur la périphérie de l'élément qui les porte pour permettre une rotation du second élément sur un tour complet. A chaque déplacement du premier élément, dans un sens ou dans l'autre le second élément tourne d'un angle égal à la moitié de l'écart angulaire entre les axes de deux broches voisines.

D'autres caractéristiques de l'invention apparaitront à la lecture de la description qui suit et se réfère aux dessins l'accompagnant qui montrent, à titre d'exemples non-limitatifs, quelques modes de réalisation de l'invention. Sur ces dessins:

La figure 1 est une vue partiellement en coupe et partiellement en élévation d'un mécanisme conforme à l'invention,

La figure 2 est une coupe transversale, suivant 2 - 2, du mécanisme de la figure 1,

Les figures 3 à 8 sont des vues développées, schématiques, du mécanisme de la figure 1 montrant les différentes positions relatives des cames et des broches pendant un tour complet; et

Les figures 9 et 10 sont des vues développées, schématiques, illustrant deux autres formes de réalisation de l'invention.

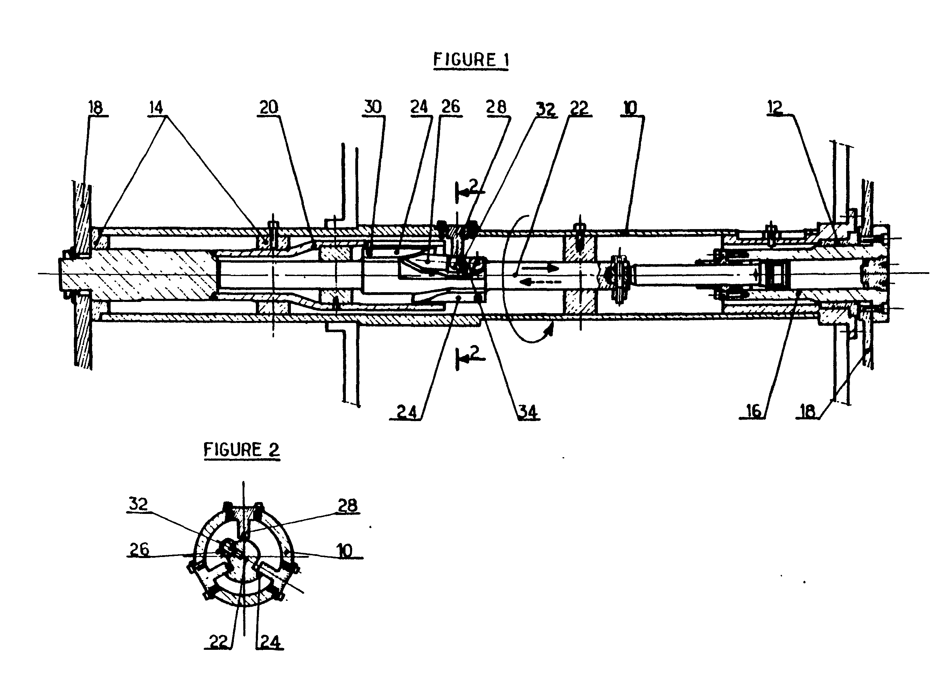

Le mécanisme à cames et broches représenté sur les figures 1 et 2 est placé à l'intérieur d'un arbre creux 10 supporté à ses extrémités par des paliers 12 et 14. Le palier 12 est monté sur une pièce tubulaire 16 fixée sur un châssis 18 et constituant le corps du vérin commandant la rotation de l'arbre creux par l'intermédiaire du mécanisme de l'invention. Les paliers 14 sont montés sur une seconde pièce tubulaire 20 solidaire du châssis 18.

Le mécanisme est constitué par un arbre 22 disposé coaxialement à l'arbre 10 et portant deux cames 24 et deux aiguilles 26 et par trois broches 28 fixées sur l'arbre 10 et faisant saillie radialement à l'intérieur de celui-ci. L'arbre 22 est attelé à la tige du piston du vérin 16 et est supporté par des paliers autorisant ses déplacements longitudinaux. Un ergot 30 fixé sur l'arbre 22 et engagé dans une fente longitudinale de la pièce 20 empêche toute rotation de l'arbre 22.

Chaque came a, en plan, la forme d'un rectangle, dont deux cités sont parallèles à l'axe de l'arbre 22, prolongé par un triangle isocèle. Les deux cames sont diamétralement opposées et orientées en sens inverse.

A chaque came est associée une aiguille 26 qui est montée pivotante sur l'arbre 22 au moyen d'une vis 32 formant pivot et située à l'avant de la came. Un ressort 34 applique la pointe de l'aiguille sur un côté de la partie triangulaire de la came, près de la base de cette partie.

Les axes des broches 28 sont situés dans un même plan perpendiculaire aux axes des arbres 10 et 22 et sont angulairement espaces de 120°. La longueur de ces broches est telle que leur extrémité peut venir en contact avec les côtés des cames 24 et des aiguilles 26.

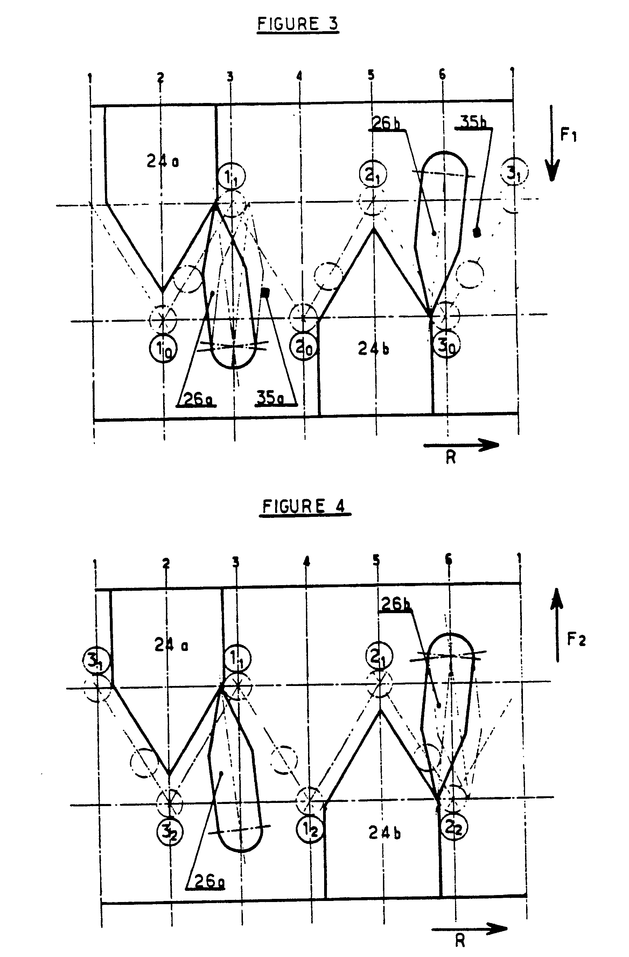

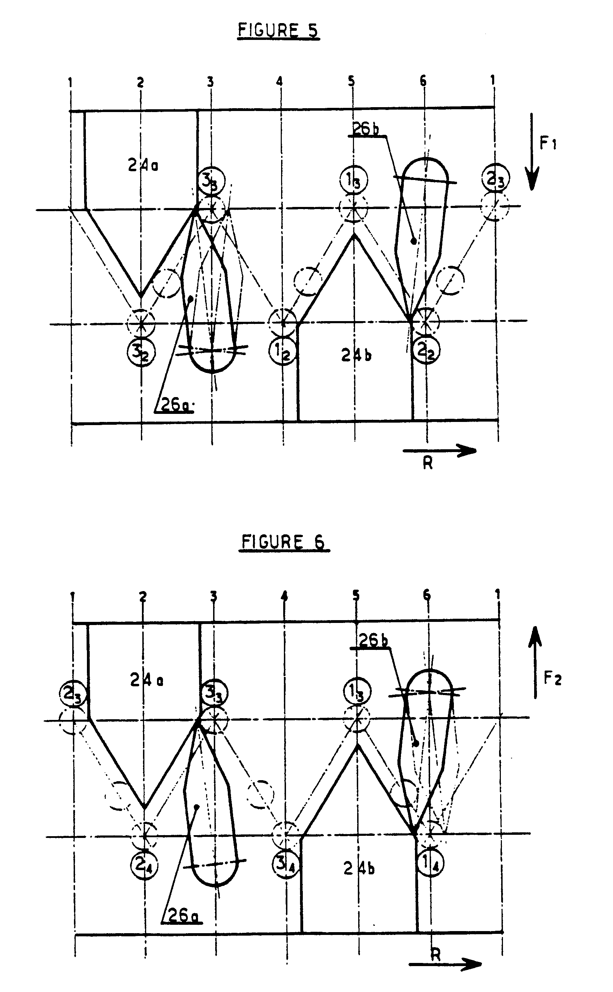

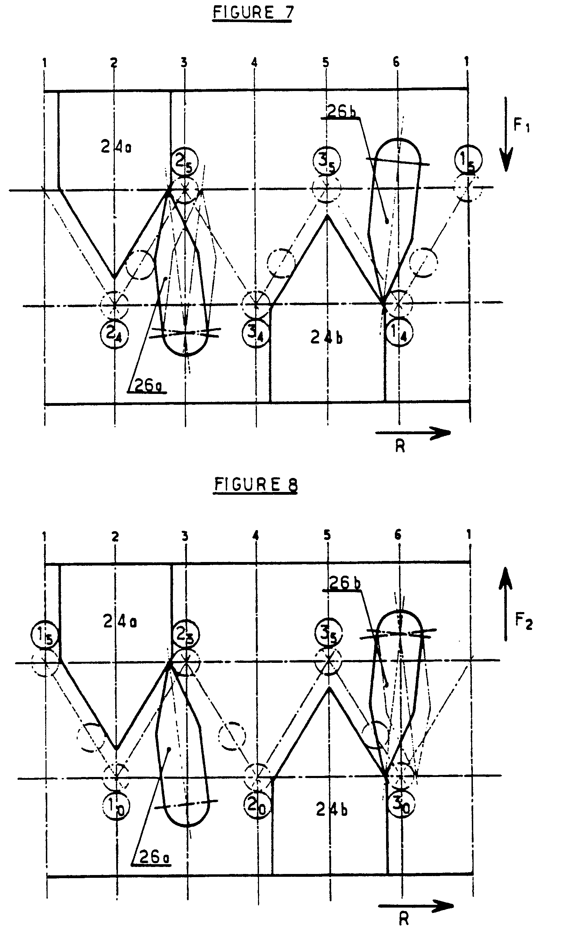

Les figures 3 à 8 montrent les positions relatives des broches, qui ont été numérotées de 1 à 3, et des cames 24a et 24b pendant un tour complet de l'arbre 10, chaque figure correspondant à un pas, c'est-à-dire à une rotation de 60° provoquée par un déplacement de l'arbre 22 égal à la course du vérin 16, dans un sens ou dans l'autre. Les différentes positions des broches, à chaque fin de course du vérin, ont été repérées sur ces figures par des indices de 0 à 5. Les aiguilles 26 ont été affectées des mêmes indices que les cames auxquelles elles sont associées.

Initialement les broches se trouvent dans les positions $1_0$, $2_0$ et $3_0$, c'est-à-dire que la broche 1 se trouve en face de la pointe de la came 24a et les broches 2 et 3 sont en contact avec les flancs de la partie rectangulaire de la came 24h. Lorsqu'on déplace l'arbre 22 dans le sens de la flèche $F_1$ de la figure 3, les broches 2 et 3 glissent sur les flancs de la partie rectangulaire de la came 24b. Pendant ce déplacement et jusqu'à ce que la broche 3 entre en contact avec la pointe de l'aiguille 26b, l'arbre 10 reste immobile. A partir de cette position, l'aiguille 26b, dont le flanc en contact avec la broche 3 a sensiblement la même inclinaison que le flanc de la partie triangulaire de la came 24b opposé à celui sur lequel l'aiguille s'appuie, pousse la broche 3 vers la droite et fait tourner l'arbre 10 dans le sens de la flèche R. Cette rotation permet le passage de la pointe de la came 24a derrière la broche 1. A partir de ce moment-là, c'est la came 24a qui, en agissant sur la broche 1, commande la rotation de l'arbre 10 dans le sens de la flèche R. Lorsque la broche 1 rencontre l'aiguille 26a elle l'écarte de la came 24a, contre l'action du ressort 34, qui n'a pas été représenté sur les figures 3 à 8. La rotation de l'aiguille 26a est limitée par une butée 35a représentée de façon schématique sur la figure 3 et placée de telle sorte que le couloir ménagé entre la came et l'aiguille, lorsque celle-ci est en butée, soit juste suffisant pour permettre le passage de la broche 1. Cette butée peut être constituée, par exemple, par un ergot fixé sur l'arbre 22, sous l'aiguille, et engagé dans une cavité oblongue creusée dans l'aiguille. Depuis le début du mouvement de l'arbre 22 jusqu'au moment où elle échappe à la came 24b, la broche 2 reste en contact avec cette came et interdit toute rotation relative des arbres 10 et 22 autre que celle imposée par les cames. Après que la broche 2 ait échappée à la came 24b, c'est l'aiguille 26a qui maintient la broche 1 en contact avec la came 24a, et lorsque la broche 1 vient en contact avec le flanc de la partie rectangulaire de la came 24a, la broche 3 vient simultanément en contact avec le flanc opposé de cette partie de la came. Ainsi, une liaison positive, bidirectionnelle, est assurée entre les arbres 10 et 22 pour toutes les positions relatives des broches et des cames et en particulier pour les positions initiales et finales. Cette liaison positive permet, notamment, de faire tourner l'arbre 10 en commandant la rotation de la pièce 20, lorsque le système hydraulique du vérin 16 est en panne, si le montage de la pièce 20 sur le châssis 18 a été conçu pour permettre cette rotation.

Au cours des pas suivants, le mouvement rectiligne de l'arbre 22 qui s'effectue alternativement dans le sens des flèches $F_1$ et $F_2$ est transformé, de la même façon, en une rotation de 60°. Après avoir tourné de six pas les galets 1, 2 et 3 se retrouvent dans leurs positions initiales $1_0$, $2_0$ et $3_0$.

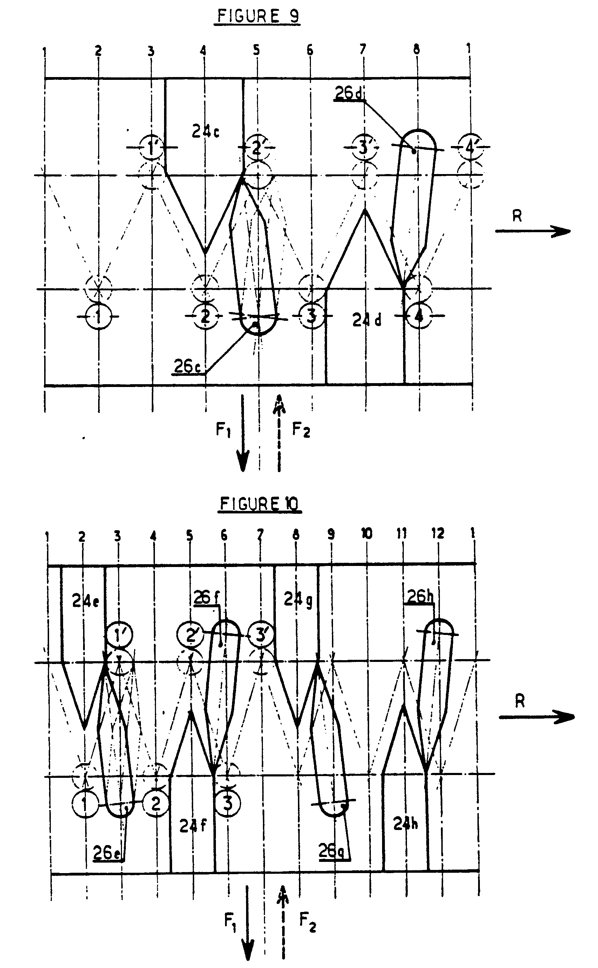

La figure 9 montre la disposition des cames et des galets dans le cas où le pas est égal à 45°. Le mécanisme comporte alors deux cames 24c et 24d qui ne sont pas diamétralement opposées et quatres broches 1 à 4.

Le mécanisme de la figure 10 permet une rotation avec un pas de 30°. Il comporte quatre cames 24e, 24f, 24g et 24h, régulièrement espacées sur la périphérie de l'arbre 22, et trois broches 1, 2 et 3.

Pour réduire les frottements, les broches pourraient être montées sur roulements ou remplacées par des galets. Les moyens utilisés pour supporter et déplacer l'arbre 22 et pour supporter l'arbre 10 peuvent être différents. Le mécanisme n'est pas nécessairement placé à l'intérieur d'un arbre creux et on peut indifféremment agir sur l'élément porte-cames ou l'élément porte-broches pour commander la rotation de l'autre élément. Il est bien entendu que ces modifications et toutes celles obtenues par la substitution de moyens équivalents entrent dans le cas de l'invention.

**Revendications**

1. Mécanisme comportant un premier élément (22) présentant un axe longitudinal et apte à être déplacé dans la direction de cet axe, alternativement dans un sens et dans l'autre, et un second élément (10) entourant le premier élément et apte à être déplacé en rotation autour de l'axe longitudinal du premier élément, l'un des éléments portant un jeu de cames (24a, 24b) et l'autre élément portant au moins une broche (28) à axe radial coopérant avec lesdites cames pour transformer le mouvement linéaire, alternatif, du premier élément en un mouvement de rotation pas à pas du second élément, caractérisé en ce qu'un des éléments porte au moins deux cames (24a, 24b) ayant en plan la forme d'un rectangle, dont deux côtés sont parallèles à l'axe desdits éléments, prolongé, dans la direction de cet axe, par un triangle, ces cames étant circonférentiellement et axialement espacées l'une de l'autre et orientées en sens opposés, en ce que l'autre élément porte au moins trois broches (28) dont les axes, qui sont radiaux, sont disposés dans un même plan perpendiculaire à l'axe desdits éléments et sont circonférentiellement espacés les uns des autres, la largeur et la disposition des cames et l'écartement des broches étant tels que deux broches voisines peuvent être simultanément en contact avec les côtés opposés de la partie rectangulaire d'une came et la troisième broche se trouve alors en face ce la pointe de l'autre came, et en ce qu'un organe d'aiguillage (26) est associé à chaque came (24) et est appliqué élastiquement sur un côté de la partie triangulaire de la came, près de sa base, de telle sorte qu'il puisse s'écarter pour autoriser le passage d'une broche se déplaçant le long de ce côté, de la pointe vers la base de cette partie de la came, et reste plaqué sur le côté de la came et en écarte la broche lorsque celle-ci, se déplaçant en sens inverse le long de la partie rectangulaire de la came, atteint la base de la partie triangulaire.

2. Mécanisme selon la revendication 1, caractérisé en ce que l'organe d'aiguillage est constitué par une aiguille (26) montée pivotante sur un axe radial (32) situé à l'opposé de la partie rectangulaire de la came (24) par rapport à la pointe de celle-ci, la pointe de l'aiguille étant située approximativement au niveau de la base de la partie triangulaire de la came et étant appliquée sur la came par un ressort (34).

3. Mécanisme selon la revendication 2, caractérisé en ce que la rotation des aiguilles (26a, 26b) est limitée par des butées (35a, 35b) de façon que la largeur du couloir ménagé entre la came (24) et l'aiguille respective (26), lorsque celle-ci est écartée de la came, soit juste suffisante pour le passage d'une broche (28).

**Patentansprüche**

1. Vorrichtung, die ein erstes Element ( 22) mit Längsachse umfasst, das in Richtung dieser Achse abwechselnd hin- und herbewegt werden kann, sowie ein zweites Element (10), welches das erste Element umgibt und um die Längsachse des ersten Elements gedreht werden kann, wobei eines der Elemente einen Satz Nocken (24a , 24b) und das andere Element mindestens einen Stift (28) mit Radialachse trägt, der mit besagten Nocken zusammenwirkt, um die abwechselnde Linearbewegung des ersten Elements in eine schrittweise Drehbewegung des zweiten Elements umzuwandeln, dadurch gekennzeichnet, dass eines der Elemente mindestens zwei Nocken (24a, 24b) trägt, die in der Ebene die Form eines Rechtecks haben, von dem zwei Seiten parallel zur Achse besagter Elemente sind, und welches in Richtung dieser Achse durch ein Dreieck verlängert wird, wobei diese Nocken in Umfangs- und Axialrichtung mit Abstand voneinander und in entgegengesetzter Richtung gerichtet angeordnet sind, dass das andere Element mindestens drei Stifte (28) trägt, deren Achsen, die radial sind, in derselben Ebene winkelrecht zur Achse besagter Elemente und in Umfangsrichtung mit Abstand voneinander angeordnet sind, wobei die Breite und die Anordnung der Nocken und der Abstand zwischen den Stiften derart gewählt sind, dass zwei benachbarte Stifte gleichzeitig mit den gegenüberliegenden Seiten des rechteckigen Teils eines Nockens in Berührung sein können und der dritte Stift dann der Spitze des anderen Nocken zugewandt ist, und dass jedem Nocken (24) ein Weichenglied (26) zugeordnet ist, das elastisch an eine Seite des dreieckigen Teils des Nockens in der Nähe der Basis angelegt wird, sodass es abheben kann, um den Durchgang eines sich dieser Seite entlang von der Spitze in Richtung der Basis dieses Nockenteils bewegenden Stiftes zu erlauben, und an die Seite des Nockens angedrückt bleibt und den Stift von ihr entfernt, wenn letzterer im Laufe seiner Bewegung in entgegengesetzter Richtung am rechteckigen Teil des Nockens entlang an der Basis des dreieckigen Teils ankommt.

2. Vorrichtung gemäss Anspruch 1, dadurch gekennzeichnet, dass das Weichenglied aus einer Weiche (26) besteht, die schwenkbar auf einen dem rechteckigen Teil des Nockens (24) im Verhältnis zu seiner Spitze entgegengesetzt angeordneten Radialbolzen (32) montiert ist, wobei sich die Spitze der Weiche ungefähr auf der Höhe der Basis des dreieckigen Teils des Nockens befindet und durch eine Feder (34) an den Nocken angedrückt wird.

3. Vorrichtung gemäss Anspruch 2, dadurch gekennzeichnet, dass der Schwenkweg der Weichen (26a, 26b) durch Anschläge (35a, 35b) derart begrenzt wird, dass die Breite des zwischen dem Nocken (24) und der entsprechenden Weiche (26) in abgehobener Stellung geschaffenen Durchgangs gerade für den Durchlass eines Stiftes (28) ausreichend ist.

## Claims

1. Mechanism consisting of a first element (22) having a longitudinal axis, and movable in the direction of this axis, alternately in one direction and in the opposite one, and a second element (10) encircling the first element and rotationally movable around the first element's longitudinal axis, one of the elements being fitted with a set of cams (24a and 24b), and the other element being fitted with at least one radial-axis spindle (28) which cooperates with the said cams to transform the alternate linear motion of the first element into a step-by-step rotational motion of the second element, characterized in that one of the elements is fitted with at least two cams (24a, 24b) whose plan view shape is that of a rectangle two sides of which are parallel to the said elements' axis, extended, in the direction of this axis, by a triangle, which cams are circumferentially and axially spaced from each other and orientated in opposite directions, in that the other element is fitted with at least three spindles (28) whose axes, which are radialwise, are situated in a single plane perpendicular to the axis of the said elements and are circumferentially spaced from one another, the width and arrangement of the cams and the spacing of the spindles being such that two spindles next to each other can be simultaneously in contact with the opposite sides of the rectangular part of a cam and the third spindle is then in front of the other cam's tip, and in that a switching member (26) is associated with each cam (24) and is elastically pressed against one side of the triangular part of the cam, near its base, so that it can move apart to make way for a spindle moving along this side, from the tip towards the base of this part of the cam, and remains applied against the cam's side and moves the spindle apart from it when the spindle, moving in the opposite direction along the rectangular part of the cam, reaches the base of the triangular part.

2. Mechanism according to claim 1, characterized in that the switching member is made up of a tongue (26) rotatingly mounted on a radial pin (32) situated opposite the rectangular part of cam (24) with respect to the cam's tip, the tongue's tip being situated approximately at the level of the base of the cam's triangular part and being pressed against the cam by a spring (34).

3. Mechanism according to claim 2, characterized in that the rotation of tongues (26a, 26b) is limited by stops (35a, 35b) so that the way left free between cam (24) and the respective tongue (26), when this one is moved apart from the cam, be just wide enough for a spindle (28) to pass.

FIGURE 2

FIGURE 1

FIGURE 3

FIGURE 4

FIGURE 5

FIGURE 6

FIGURE 7

FIGURE 8

EP 0 247 917 B1

FIGURE 9

FIGURE 10